# EUROPEAN PATENT APPLICATION

(11) **EP 4 400 386 A1**
(43) Date of publication of application: **17.07.2024**
(21) Application number: 24151318.3
(22) Date of filing: 11.01.2024
(51) Int. Cl.: B61L 5/18, B61L 23/04, B61L 27/53, G06V 20/58, H05B 45/58, B61L 25/06

(54) **SYSTEM AND METHOD FOR PREDICTING THE REMAINING USEFUL LIFE OF LED SIGNALING LIGHTS USED IN RAILWAY NETWORKS**

(30) Priority: 12.01.2023 IN 202341002489
(71) Applicant: ALSTOM Holdings, 93400 Saint-Ouen-sur-Seine (FR)
(72) Inventor: KARTHIK, Harohalli GunduRao, 560019 BANGALORE (IN); GANESAN, Muniandi, 626001 VIRUDHUNAGAR (IN)
(74) Representative: Lavoix

(57) **Abstract**

System for predicting the remaining useful life of LED signaling lights comprises:
- one device (10) comprising a plurality of light-sensitive sensors (17)and arranged to capture one image of a railway signaling light (3) including a first LED lamp (4) emitting a light having a first color;
- one or more electronic processing units configured:
- to measure the actual intensity distributed over the plurality of light-sensitive sensors of said light; and then
- to calculate a future degradation rate of said first LED lamp (4) based on the measured actual intensity, and on one or more of: a reference intensity for said first LED lamp (4); an accumulated time of operation carried out by said first LED lamp (4), recorded data for said first LED lamp (4) indicative of previously measured intensity(ies).

## Description

The present invention relates to a system and a method for predicting the remaining useful life of LED (Light Emitting Diode) signaling lights used in railway networks.

As known, over the years the use of LED-based lights has been increasing in many technical fields.

In particular, the signalling systems of railroad networks comprise a huge number of lights which are installed over the extension of each railway line, and also in this technical field there is used an increasing number of LED-based signalling lights.

Clearly, the correct functioning of such LED signalling lights is fundamental for the proper and safe operation of a railway network; indeed, failure of any signalling light can lead for example to traffic interruption due to the urgent need of performing unscheduled maintenance activities.

Hence, the possibility of understanding as early as possible if a LED-based signalling light may fail is a very important issue.

Nowadays, there are known methods used for deriving the remaining useful lifetime of LED-based lights, which detect for instance the luminous maintenance, the colour shift, the VOC (volatile organic compound) contaminated luminous flux, and the colour stability.

The major drawback of all these known methods resides in the fact that they require a continuous recording of LED light data.

Clearly, such methods are not practicable or cost affordable in railroad signalling systems, considering the tens of thousands of signalling LED lights used along railway tracks which would entail to set the necessary monitoring equipment for each lamp of a corresponding light.

Hence, the presence invention is aimed at providing a solution for at least mitigating such issues, in particular as regard to the capability of predicting the remaining useful time of LED signalling lights used in railway networks.

This aim is achieved by a system for predicting the remaining useful life of LED signaling lights used in a railway network, characterized in that it comprises at least:
- at least one device comprising a plurality of light-sensitive sensors, said at least one device being suitable to be mounted on board of a railway vehicle and arranged to capture, while the railway vehicle is traveling along said railway network, at least one image of a railway signaling light which includes at least a first LED lamp emitting a light having a first color;
- one or more electronic processing units configured at least:
- to measure, based on the image captured, the actual intensity distributed over the plurality of light-sensitive sensors of said light having a first color; and then
- to calculate a future degradation rate of said first LED lamp, said future degradation rate being calculated based at least on the measured actual intensity distributed over the plurality of light-sensitive sensors, and on one or more of: a reference intensity for said first LED lamp; an accumulated time of operation carried out by said first LED lamp, recorded data for said first LED lamp indicative of previously measured intensity(ies) distributed over the plurality of light-sensitive sensors of said light having a first color.

This aim is also achieved by a method for predicting the remaining useful life of LED signaling lights used in a railway network, characterized in that it comprises at least the following steps:
(a): capturing, via at least one device comprising a plurality of light-sensitive sensors and suitable to be mounted on board of a railway vehicle, at least one image of a railway signaling light which includes at least a first LED lamp emitting a light having a first color capture, while the railway vehicle is traveling along said railway network;
(b): based on the image captured, measuring, via one more electronic control units, the actual intensity distributed over the plurality of light-sensitive sensors of said light having a first color;
(c): calculating a future degradation rate of said first LED lamp, said future degradation rate being calculated based at least on the measured actual intensity distributed over the plurality of light-sensitive sensors, and on one or more of: a reference intensity for said first LED lamp; an accumulated time of operation carried out by said first LED lamp, recorded data for said first LED lamp indicative of previously measured intensity(ies) distributed over the plurality of light-sensitive sensors of said light having a first color.

Further characteristics and advantages will become apparent from the description of some preferred but not exclusive exemplary embodiments of a system and method according to the present disclosure, illustrated only by way of non-limitative examples with the accompanying drawings, wherein:
Figure 1 is a block diagram schematically illustrating a system for predicting the remaining useful life of LED signaling lights used in a railway network according to the invention;
Figure 2 schematically illustrates some components of the system of figure 1 mounted on board of an exemplary railway vehicle;
Figure 3 schematically illustrates an exemplary embodiment of some components arranged to capture images of railway signaling lights;
Figure 4 is a flow diagram schematically illustrating a method for predicting the remaining useful life of LED signaling lights used in a railway network according to the invention.

It should be noted that in order to clearly and concisely describe the present disclosure, the drawings may not necessarily be to scale and certain features of the disclosure may be shown in somewhat schematic form.

Further, when the term "adapted" or "arranged" or "configured" or "shaped", is used herein while referring to any component as a whole, or to any part of a component, or to a combination of components, it has to be understood that it means and encompasses correspondingly either the structure, and/or configuration and/or form and/or positioning of the related component or part thereof, or combinations, such term refers to.

In particular, for electronic and/or software means, each of the above listed terms means and encompasses electronic circuits or parts thereof, as well as stored, embedded or running software codes and/or routines, algorithms, or complete programs, suitably designed for achieving the technical result and/or the functional performances for which such means are devised.

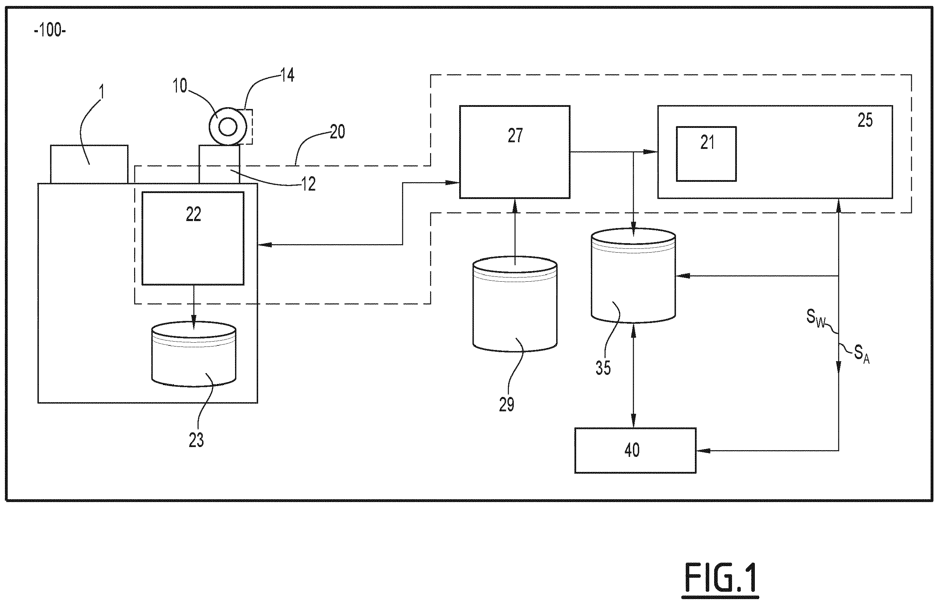

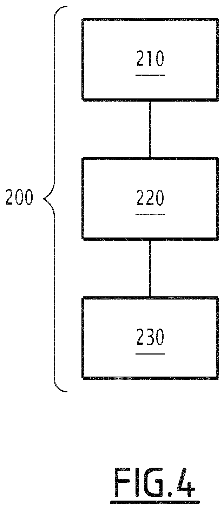

Figures 1 and 4 schematically illustrate a system and a method, respectively, for predicting the remaining useful life ("RUL") of LED signaling lights used in a railway network according to the invention, therein indicated by the corresponding overall reference numbers 100 and 200.

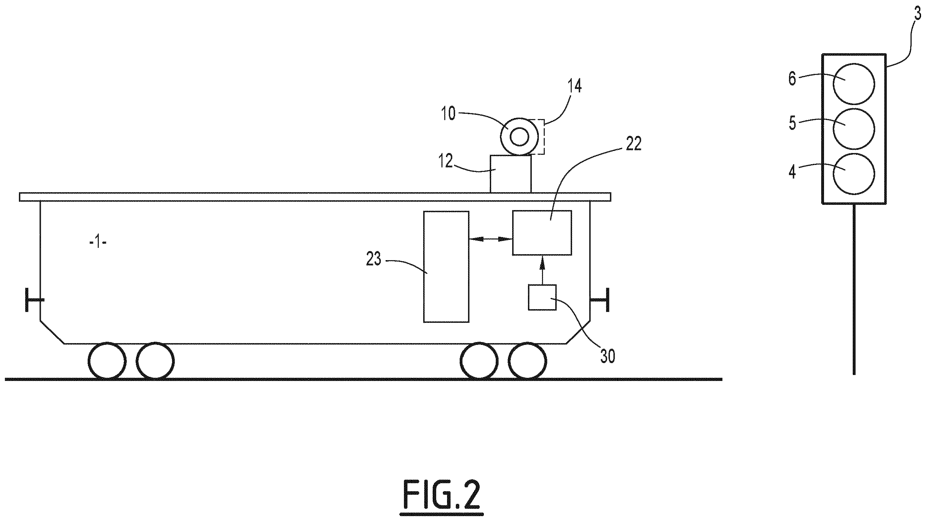

As illustrated in figure 1, the system 100 according to the invention comprises at least one device 10 which comprises a plurality of light-sensitive sensors, and is suitable to be mounted on board of a railway vehicle schematically represented in figure 2 by the reference number 1.

In particular, the at least one device 10 is arranged to capture, while the railway vehicle 1 is traveling along a railway network, at least one image of a railway signaling light 3 which includes at least a first LED lamp 4 emitting a light having a first color.

The definition of a railway vehicle has to be interpreted hereby in the broadest sense possible and includes for instance any type of railway vehicle formed by a single unit, such as a railway vehicle specifically used for maintenance, or a vehicle part of a multi-car convoy, such as a locomotive or a car, et cetera.

The railway signaling light 3 can be any type of signaling light installed along a railway network, and can comprise one or more LED lamps or lights adapted each to emit a light of a corresponding color.

For instance, in the exemplary embodiment illustrated in figure 2, the railway signaling light 3 includes three LED-based lamps, namely a first LED lamp 4 configured to emit for example red light, a second LED lamp 5 configured to emit for example yellow light, and a third LED lamp 6 configured to emit for example green light.

As common in railway networks, other LED signaling lights 3 can have also LED lamps emitting for example a white color light, and more precisely a white lunar color.

In the following description, specific reference will be made to the first LED lamp 4 for the sake of simplicity; however, what herein described has to be understood applicable to all types of LED-based railway signaling lights installed along the railway network and having any number of LED lamps or lights, such as the LED lamps 5 and 6.

The system 100 according to the invention comprises one more electronic processing units, cumulatively indicated by the reference number 20, configured at least:
- based on the image captured, i.e. that of the railway signaling light 3, and in particular of the LED lamp 4, to measure the actual intensity distributed over the plurality of light-sensitive sensors of at least the light having a first color;
- to calculate a future degradation rate of the first LED lamp, e.g. the lamp 4, said future degradation rate being calculated based at least on the measured actual intensity distributed over the plurality of light-sensitive sensors, and on one or more of: a reference original intensity distributed over the plurality of light-sensitive sensors of at least the light having a first color of the first LED lamp 4; the accumulated operation time already carried out by the first LED lamp 4; recorded data for the first LED lamp 4 indicative of previously measured intensity/ies distributed over the plurality of light-sensitive sensors of said light having a first color.

As it will result clearly from the following description, in the system 100 according to the invention, the one or one or more electronic processing units 20 may comprise or be constituted by only one processing unit carrying out at least the measurements of the actual intensity distributed over the plurality of light-sensitive sensor and the calculation degradation rate above indicated; or there could be two or more processing units cooperatively carrying out such tasks.

Further, as those skilled in the art may easily appreciate some components of the system 100 according to the invention may be installed alternatively on board of the railway vehicle 1 itself or at a trackside location.

In one possible embodiment, as illustrated in figure 1, the one or more electronic processing units comprise a first electronic processing unit 21 suitable to be located remote from the railway vehicle, e.g. at a trackside position, for instance at a railway control room or at a maintenance site.

The first electronic processing unit 21, which is for instance part of a prediction server indicated in figure 1 by the reference number 25, and running for example on a neural network, is configured to calculate the future degradation rate of the LED lamp 4 and to issue an alert signal or an alarm signal if the calculated future degradation rate exceeds a corresponding threshold.

In one possible embodiment, the first electronic processing unit 21 of the prediction server 25 performs a prediction of the remaining useful life ("RUL") for the relevant signalling LED lamp 4 based on the signalling light's historical data and current intensity characteristics as above indicated. It calculates the degradation rate of the intensity of the signal colour light over a predefined future time of operation, i.e. over a predefined number of hours of operation,
For instance, the first electronic processing unit 21 outputs: a warning signal Sw if the calculated intensity value, in particular distributed over the number of light-sensitive sensors, i.e. the pixels of the relevant CCD camera, deviates of a first threshold, e.g. 10%, from an expected value over one hundred thousand (lakh) hours of operational hours; and an alarm signal S_{A} if such deviation at least reaches a second threshold bigger than the first threshold, e.g. 15%, from the expected value over one lakh hours of operational hours.

According to this exemplary embodiment, the one or more electronic control units 20 comprise a second electronic processing unit 22 which is suitable to be mounted on board of the railway vehicle 1, and is configured at least to activate the device 10 to capture said at least one image of the railway signaling light 3, and in particular of the LED lamp 4 when the railway vehicle 1 arrives, during its travel, at a predetermined distance from the railway signaling light 3 itself.

Usefully, in one possible embodiment, the system 100 comprises a mounting support or platform, schematically indicated in figures 1 and 2 by the reference number 12, which mechanically supports the at least one device 10.

In particular, the mounting support 12 is mounted on board of the railway vehicle 1 so as to be movable and to adjust the orientation of the at least one device 10 relative to the signaling light 3.

For instance, the actual position of the mounting support 12, and thus the current orientation of the device 10 relative to the signaling light 3 whose image has to be captured, can be regulated by control signals emitted by the second electronic processing unit 22.

In one possible embodiment, the device 10 comprises at least one baffle, schematically represented in figures 1 and 2 by the reference number 14, which is adapted to at least attenuate stray light to enter into the field of view of the at least one device 10 itself.

The baffle 14 comprises or can be constituted by any suitable opto-mechanical device that prevents stray light coming out of the field of view to enter into the optical system of the device 10.

Indeed, the intensity of bright sources, such as the sun, is unscattered and high. Thus, due to high-intensity sources in the field of view of the device 10, the light detecting part of the device 10 could be saturated in a short time, and recognition of signal lights from a bright background would virtually very difficult if not impossible. Therefore, to identify the signal light of interest, especially the sun light is properly attenuated using the baffle 14.

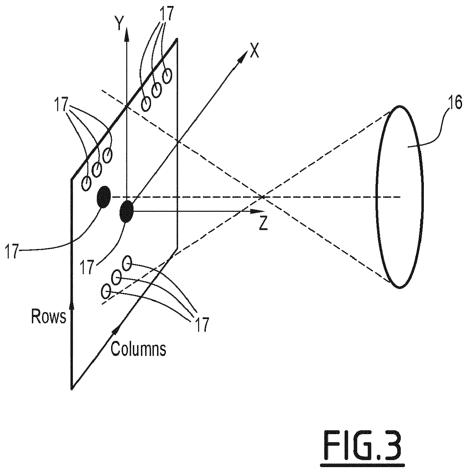

In one aspect, the at least one device 10 comprises at least one lens, schematically represented in figure 3 by the reference number 16, which is positioned for example at a suitable distance from the plurality of light-sensitive sensors, and is adapted to ensure a spread of captured color light over a predefined number of light-sensitive sensors.

The light-sensitive sensors are for example distributed over a certain number of rows and columns; for the sake of ease of illustration, only a few light-sensitive sensors are represented in figure 3 and therein indicated by the reference number 17.

Usefully, in one possible aspect, the at least one device 10 comprises a plurality of charge coupled devices (CCD) cameras, each CCD camera having an array of light-sensitive pixels 17, which constitute the light-sensitive sensors and are adapted to capture a corresponding light color.

In particular, in one embodiment the device 10 comprises four CCDs cameras, namely one for each of the most common three signal light colours, i.e. red, yellow and green, and a fourth one for lunar white colour light.

To this end, each CCD is provided with a filter to capture the colour light of interest; in this way, each of the CCD cameras used can capture a corresponding light colour emitted by the various LED lamps of railway signalling lights.

In one embodiment, the plurality of CCD cameras are mutually positioned along a stripe pattern to allow the required pixels to be captured from the light source. The suitable stripe pattern allows only the required pixels to capture the LED light from the signalling lamp. The pattern is arranged so that the captured light is spread in the desired pattern, namely only on the desired pixels.

In the exemplary embodiment illustrated in figures 1 and 2, the system 100 according to the invention further comprises a device 30 configured for providing signals indicative of the actual position of the railway vehicle 1 along the railway network when the at least one device 10 captures the at least one image of the railway signaling light 3.

The device 30, which can comprise for example a GPS receiver installed on board of the railway vehicle 1, can transmit such signals for instance to the onboard second electronic processing unit 22.

In turn, according to one possible embodiment, the onboard second electronic processing unit 22 is configured also to determine the actual position of the railway vehicle responsive to the signals received from the GPS receiver 30.

The second electronic processing unit 22 can transmit directly to the trackside first electronic processing unit 21, or to a trackside server which is in operative communication with the first electronic processing unit 21, schematically represented in figure 1 by the reference number 27, corresponding data indicative of the determined actual position of the railway vehicle 1.

Further, the second electronic processing unit 22 can transmit the image(s) captured by the at least one device 10, and in particular details about the effected capture(s), such as aspect\colour of signal, location of the signal, and timestamp.

Such transmission can be carried out over any suitable communication network, directly to the prediction server 25, and in particular to the first electronic processing unit 21, or to the trackside server 27 which will convey the relevant data received towards the prediction server 25 itself.

If desired or needed, onboard the railway vehicle 1 there can be installed an onboard database 23 or any equivalent storing unit, for example to hold the latest images along with related details above mentioned.

In the exemplary embodiment illustrated, the system 100 comprises for instance a further storage unit, such as a signal database 29, which constitutes a repository of all light signals 3 installed over the relevant railway network with a unique identifier for each light signal, information about the location of each light signal 3 and the track(s) controlled by the corresponding light signal 3. For instance, the signal database 29 contains information from the group comprising but not limited to each signal location, each signal identification data (ID), for each signal the track ID controlled by the corresponding signal, the signal type, the distance from the signal to capture the image(s), expected lux. For example, the expected Lux value can be 150 Lux for red light, 175 Lux for yellow light, 150 Lux for green light, 50 Lux for white LUX.

As above indicated, when used, the trackside server 27 receives, among others, for example the captured image(s) and retrieves the relevant signal information, such as the signal ID, the track ID, et cetera, based on the location data received and by polling and retrieving the relevant one stored in the signal database 29.

The received information is stored in a prediction database 35 which can be a part of or in operative communication with the prediction server 25.

The prediction database 35 constitutes for instance a repository for all images captured and related information of signal lights used by the prediction server 25 for proper analysis. It calculates for example the actual distribution of light intensity by processing the image(s) and updates the details for the relevant signal ID and the signal light colour captured, the hours of operations carried out.

Conveniently, and as illustrated in the exemplary embodiment of figure 1, the system 100 further comprises a controller 40 adapted to track the operating time during which the relevant light of the light signal 3 having a first color, e.g. the LED lamp 4, has been switched ON.

Also such data can be stored in the prediction database 35 and used by first electronic processing unit 21.

As above mentioned, figure 4 schematically illustrates a method 200 for predicting the remaining useful life of LED signaling lights used in a railway network, which can be carried in connection with and by the components of the system 100 previously described.

In particular, the method 200 comprises at least the following steps:
- 210: capturing, via at least one device 10 comprising a plurality of light-sensitive sensors and suitable to be mounted on board of a railway vehicle 1, at least one image of a railway signaling light 3 which includes at least a first LED lamp 4 emitting a light having a first color capture, while the railway vehicle 1 is traveling along the railway network;
- 220: based on the image captured, measuring, via one more electronic control units 20, the actual intensity distributed over the plurality of light-sensitive sensors of said light having a first color;
- 230: calculating a future degradation rate of the first LED lamp 4, said future degradation rate being calculated based at least on the measured actual intensity distributed over the plurality of light-sensitive sensors, and on one or more of: a reference intensity for said first LED lamp 4; an accumulated time of operation carried out by said first LED lamp 4, recorded data for said first LED lamp 4 indicative of previously measured intensity(ies) distributed over the plurality of light-sensitive sensors of said light having a first color.

It has to be understood that the method 200 can carry out all functionalities and tasks foreseen for and performed by the various components of the system 100 within the frame of the present invention, which are not replicated and expressed hereby in terms of phases/steps just for the sake of conciseness.

In practice, according to the system 100 and method 200, while the railway vehicle is travelling, the onboard first electronic processing unit 21 determines an approaching signal light based on the current location of vehicle itself and the onboard database 23 that it hosts. The distance at which the first electronic processing unit 21 triggers the device 10 to capture the signal light image is defined based for example on one or more, preferably all, the following factors, namely time to trigger and initiate the capture of image T₀, time to end the capture the image T₁, speed of the train, curvature of the track, slope of the track, distance of visibility of the signal, environmental conditions.

For example, concerning the effects of the speed of the vehicle 1, the minimum visibility distance of main signal LED signal lighting units is 600m, in clear daylight with peak sunrays at rated voltage. Red, Green, Yellow and white aspects are within their ranges within the specified temperature range.

Considering such minimum visibility distance of 600 m, the distance is =Speed*((T₁ - T₀) +any delay); any other delay time can be added if desired or necessary. The CCD Integration time is equal to (T₁-T₀). In this CCD integration time, the charge from the LED light is accumulated over each CCD's pixels. The normal operation of the unit 22 is for instance at a 250ms cycle. For T0 of 1 hr, 20mins, 0 (zero) seconds, and T₁ of 1hr, 20mins, 3 seconds, and any other delay of 2 seconds, with the typical distance of 600 m, the CCD integration time results to be= T1-T0 = 3 seconds. Thus by applying the above formula, 600 m = Speed * (5 seconds) => Speed = 120 m/s => (120 * 3.6) => 432 km/h. The speed of the train can be around 400Kmph. Hence, the system can detect the signal intensity for the typical operation speed of 300 Km/h.

Concerning the effects slope/curves, for example a 10% decrease in the distance can be considered for each of them. Hence, if both slope and curvature exist, then the speed for full exactness can be limited accordingly.

However, as previously indicated, it is possible to mount CCDs on the adjustable mounting support 12 that can adjust the CCDs field of view in the curve or slope. If the central and corner pixels are not illuminated in these scenarios, then, mounting platform angle can adjust itself to capture LED lamp view central and corner pixels as well.

In this way, any issue related to the signal capture at the slope or curve can be overcome. This flexible movement can be initiated for instance only when the upcoming signal 3 is around the slope/curve. To deduce these angular movements precisely, a gyroscope can be used inside the mounting support 12. Based on gyro angles, the mounting support 12 can move accordingly in horizontal or vertical direction. Thus, the onboard electronic processing unit 22 can calculate the relative distance between itself and the relevant approaching signal 3. It also provides the track identification (ID) and the location of the vehicle 1.

Accordingly, the system 100 uses the device 10 mounted on the vehicle, as shown in figure 2, at a convenient position, enabling the device 10, and in particular the CCDs, to capture the images of the signal lights and in particular of the respective differently colour lamps. The captured image(s) can be sent to the first electronic processing unit 21 for further elaboration/transmission and above described. Alternatively, CCDs with digital signal processing (DSP) readout can calculate the intensity of real-time signals. Simultaneously, the spread of a single LED light signal over the number of pixels is also captured.

Then, the onboard second electronic processing unit 22 transmits the captured image(s) along with details of capture, such as for example aspect\colour of signal(s), location of the signal(s), and timestamp to the trackside server 27 (or directly to the first electronic processing unit 21) over a communication network.

According to the exemplary embodiment of figure 1, once the images captured are received, the trackside server 27 determines the signal ID based on the location received from the onboard second electronic processing unit 22 from the signal database 29. It stores the information regarding the image (aspect, timestamp, and image) onto the prediction database 35.

The image stored on the prediction database 35 is used to calculate the intensity of the image.

The intensity calculation can be performed with the support of an image processing framework, for example, OpenCV. In particular, the intensity of the image captured over pixel spread is calculated.

Upon calculation, the intensity, is fed as one of the inputs to the prediction server 25.

The prediction server 25 runs for instance a neural network to calculate the degradation rate and predict the RUL of a signal light 3.

Other inputs into the neural network can include for example but not limited to:
- the original (reference) intensity for the signal aspect, which data can be derived for example from the specification of the light manufacturer;
- the measured intensity spread pattern across the pixels;
- data related to the intensity(ies) of the signal light captured over operating hours.
This can be considered as the mean value or other equivalent value of intensity data during hours of operation of the signal;
- hours of operation of the signal, obtained for instance from a wayside/signalling controller 40;
- average number of pixels spread during the light capture. To this end, initially, optics and lens along with CCDs can be calibrated to have the receiving light spread over 'N' number of pixels. If actual spread of signalling LED light exceeds 'N' pixels, it can help to identify the degradation in light intensity. These reference number of pixels may vary from few tens to few hundreds depending on the lens/optical/ stripe pattern design.

The outputs from this neural network include for example but not limited to:
- the predicted degradation of intensity. The neural network will predict the degradation rate of intensity for instance based on the operation hours, the measured intensity, historical intensity(ies) data, number of pixels spread, and the original (reference) intensity.
- the remaining useful time (RUL) of a LED signal light, and in particular the predicted remaining useful life (expressed for instance in hours) of the relevant signal lamp.
- an output indicative the start of Inventory, namely a notification for the maintenance crew of organization of the time at which the signal light is degrading and has to be maintained in the inventory for the replacement;
- a further notification for the time at which the replacement of the LED signal light has to be executed, as its degradation rate can cross an error threshold, as below detailed.

In particular, according to one possible embodiment, there is considered a nominal degradation of the LED signal's peak intensity for example of 5% over one lakh hours of operation for each lamp. The neural network predicts the remaining usable life of the LED lamp and outputs notifications depending on the signal light's degradation over possible 1 lakh hours of usage as the reference.

For instance, if there is a prediction of 10% to 15% of degradation over 1 lakh hours of predicted usage, a warning signal Sw can be output.

If the predicted degradation is above 15% of over 1 lakh hours of predicted usage, an alarm signal S_{A} for needed replacement of signal\maintenance is issued.

Usefully, if the prediction of degradation is less than 5%, then the possible time to cross the 10% and 15% degradation thresholds are predicted.

From this, the remaining useful time, i.e., time from the current moment of prediction to the 'time for crossing over the 15% degradation threshold is calculated. The actual measured intensity will be used further to predict further intensity degradation of 10% to 15% and RUL.

The warning signal Sw and/or the alert signal S_{A} can be viewed for example on the GUI of the controller 40. This display can be updated only when the inventory is required from the 'n' number of weeks from the current day (based on the design choice).

After the physical replacement of the specific signal lamp or lamps, the signal details are reset in the prediction database 35. The prediction will start by erasing the historical data for that aspect of the specific signal.

Hence, it is evident from the foregoing description that the system 100 and method 200 according to the present invention allow achieving the intended aim since they allow to predict the remaining useful of LED light signals, and in particular of any lamp thereof, by identifying as early as possible the loss of brightness and performance over time by measuring the intensity spread and its magnitude reduction.

These results are achieved according to a solution very simple which, once installed on any railway vehicle, can be used to monitor in principle all LED light signals distributed over a railway network.

The system 100 and method 200 thus conceived are susceptible of modifications and variations, all of which are within the scope of the inventive concept as defined in particular by the appended claims; for example, any of the tasks previously described as executed by an electronic control unit could be allocated and executed by another one.

All the details may furthermore be replaced with technically equivalent elements.

## Claims

1. System (100) for predicting the remaining useful life of LED signaling lights used in a railway network, **characterized in that** it comprises at least:
- at least one device (10) comprising a plurality of light-sensitive sensors (17), said at least one device (10) being suitable to be mounted on board of a railway vehicle (1) and arranged to capture, while the railway vehicle (1) is traveling along said railway network, at least one image of a railway signaling light (3) which includes at least a first LED lamp (4) emitting a light having a first color;
- one or more electronic processing units (20) configured at least:
(a) to measure, based on the image captured, the actual intensity distributed over the plurality of light-sensitive sensors of said light having a first color; and then
(b) to calculate a future degradation rate of said first LED lamp (4), said future degradation rate being calculated based at least on the measured actual intensity distributed over the plurality of light-sensitive sensors, and on one or more of: a reference intensity for said first LED lamp (4); an accumulated time of operation carried out by said first LED lamp (4), recorded data for said first LED lamp (4) indicative of previously measured intensity(ies) distributed over the plurality of light-sensitive sensors of said light having a first color.

2. The system (100) as in claim 1, wherein said one or more electronic control units (20) comprise a first electronic processing unit (21) suitable to be installed remote from the railway vehicle (1), said first electronic processing unit (21) being configured to calculate said future degradation rate and to issue a warning (Sw) or alarm (S_{A}) signal if the calculated future degradation rate exceeds a corresponding alert or alarm threshold, respectively.

3. The system (100) as in any one of the preceding claims, wherein said at least one or more electronic processing units (20) comprise a second electronic processing unit (22) which is suitable to be mounted on board of the railway vehicle (1), said second electronic processing unit (22) being configured at least to activate the device (10) to capture said at least one image of the railway signaling light (3) when the railway vehicle (1) arrives at a predetermined distance from the railway signaling light (3) itself.

4. The system (100) as in any one of the preceding claims, wherein it comprises a mounting support (12) for supporting the at least one device (10), said mounting support (12) being suitable to be movably mounted on board of the railway vehicle (1), to adjust the orientation of the at least one device (10) relative to the signaling light (3).

5. The system (100) as in any one of the previous claims, wherein said at least one device (10) comprises at least one baffle (14) adapted to at least attenuate stray light to enter into the field of view of the at least one device (10).

6. The system (100) as in any one of the previous claims, wherein said at least one device (10) comprises at least one lens (16) adapted to ensure a spread of captured color light over a predefined number of light-sensitive sensors (17).

7. The system (100) as in any one of the previous claims, wherein said at least one device (10) comprises a plurality of charge coupled devices (CCD) cameras, each CCD camera having an array of light-sensitive pixels and being adapted to capture a corresponding light color.

8. The system (100) as in claim 7, wherein the plurality of CCD cameras are mutually positioned along a stripe pattern.

9. The system (100) as in any one of the previous claims, wherein it further comprises one or more of:
- a device (30) configured for providing signals indicative of the actual position of the railway vehicle (1) along the railway vehicle when the at least one device captures said at least one image of the railway signaling light (3);
- a first storage (29) storing at least data related to each railway signaling light installed along the railway network;
- a controller (40) adapted at least to track the operating time during which said light having a first color is ON.

10. Method (200) for predicting the remaining useful life of LED signaling lights used in a railway network, comprising at least the following steps:
- (210): capturing, via at least one device (10) comprising a plurality of light-sensitive sensors and suitable to be mounted on board of a railway vehicle (1), at least one image of a railway signaling light (3) which includes at least a first LED lamp (4) emitting a light having a first color capture, while the railway vehicle (1) is traveling along said railway network;
- (220): based on the image captured, measuring, via one or more electronic control units (20), the actual intensity distributed over the plurality of light-sensitive sensors of said light having a first color;
- (230): calculating a future degradation rate of said first LED lamp (4), said future degradation rate being calculated based at least on the measured actual intensity distributed over the plurality of light-sensitive sensors, and on one or more of: a reference intensity for said first LED lamp (4); an accumulated time of operation carried out by said first LED lamp (4), recorded data for said first LED lamp (4) indicative of previously measured intensity(ies) distributed over the plurality of light-sensitive sensors of said light having a first color.
